Europäisches Patentamt

European Patent Office

Office européen des brevets

(11) Veröffentlichungsnummer: **0 320 789 B1**

(19)

(12) **EUROPÄISCHE PATENTSCHRIFT**

(45) Veröffentlichungstag der Patentschrift: **13.05.92**

(21) Anmeldenummer: **88120499.4**

(22) Anmeldetag: **08.12.88**

(51) Int. Cl.⁵: **B21D 53/84**, B21D 39/06

(54) **Verfahren zum Verbinden.**

(30) Priorität: **15.12.87 DE 3742480**

(43) Veröffentlichungstag der Anmeldung:
**21.06.89 Patentblatt  89/25**

(45) Bekanntmachung des Hinweises auf die
Patenterteilung:
**13.05.92 Patentblatt  92/20**

(84) Benannte Vertragsstaaten:
**BE CH DE ES FR GB IT LI NL SE**

(56) Entgegenhaltungen:
**EP-A- 0 230 731**
**DE-A- 2 922 509**
**DE-A- 3 323 640**
**DE-A- 3 401 057**
**DE-A- 3 616 901**

(73) Patentinhaber: **Emitec Gesellschaft für Emis-**
**sionstechnologie mbH**
**Hauptstrasse 150**
**W-5204 Lohmar 1(DE)**

(72) Erfinder: **Swars, Helmut**
**Riedweg 11**
**W-5060 Bergisch Gladbach 1(DE)**

(74) Vertreter: **Neumann, Ernst Dieter, Dipl.-Ing. et**
**al**
**HARWARDT NEUMANN PATENTANWÄLTE**
**Scheerengasse 2 Postfach 1455**
**W-5200 Siegburg(DE)**

EP 0 320 789 B1

## Beschreibung

Die Erfindung betrifft ein Verfahren zum Verbinden einer Hohlwelle mit auf diese aufgeschobenen Konstruktionselementen, die eine den Außendurchmesser der Hohlwelle entsprechende Durchgangsöffnung aufweisen, insbesondere zum Herstellen von gebauten Nockenwellen, Kurbelwellen sowie Getriebewellen, mittels hydraulisch bewirkten Aufweitens der Hohlwelle unter plastischer Verformung derselben und unter bleibender elastischer Vorspannung in der Randschicht der Durchgangsöffnung der aufgeschobenen Konstruktionselemente, sowie für dieses Verfahren geeignete Konstruktionselemente.

Das gattungsgemäße Verfahren zum Verbinden von Konstruktionselementen mit Hohlwellen hat sich insbesondere im Anwendungsgebiet der Nockenwellen bewährt. Gegenüber sogenannten Schrumpfverbindungen weist es Vorteile hinsichtlich der übertragbaren Drehmomente auf, da die erzielbare Spannung nicht durch Temperaturgrenzwerte für die Materialien beschränkt sind, die bei der Herstellung der Fügeverbindung nicht überschritten werden dürfen. Gegenüber Lötverbindungen liegt der wesentliche Vorteil im vereinfachten, grundsätzlich kalt durchzuführenden und deshalb kostengünstigeren Fügeverfahren. Die gebauten Teile können hierbei auch mit geringeren Toleranzen gefertigt werden.

Der vorliegenden Erfindung liegt die Aufgabe zugrunde, das Verfahren der eingangs genannten Art im Hinblick auf die zwischen den Konstruktionselementen und der Hohlwelle übertragbaren Drehmomente nochmals weiter zu verbessern, und somit den Anwendungsbereich auf höchstbeanspruchte Bauteile wie z.B. gebaute Kurbelwellen auszuweiten, ohne auf die grundsätzlichen verfahrenstypischen Vorteile bei der Herstellung der Verbindung zu verzichten.

Die Lösung der Aufgabe liegt erfindungsgemäß in einem Verfahren gemäß einem der unabhängigen Ansprüche, das sich dadurch auszeichnet, daß durch das hydraulich bewirkte Aufweiten der Hohlwelle eine stoffschlüssige Verbindung zwischen dem Material der Randschicht der Durchgangsöffnung des Konstruktionselementes mit dem Material der plastisch verformten Hohlwelle hergestellt wird.

Nach den erfindungsgemäßen Verfahren wird der in unmittelbarer Berührung stehende Flächenanteil an dem die den Stoffschluß bildende Adhäsionswirkung auftritt, wesentlich vergrößert. Damit wird das übertragbare Drehmoment, das von dem Produkt aus Flächenpassung und Reibungskoeffizienten abhängig ist, wesentlich gesteigert. ($M_t = \mu_z \times F_r$). Während bei rein kraftschlüssigen Verbindungen bei Preßverbänden Zapfenreibungskoeffizienten $\mu_z$ in der Größenordnung von 0,1 bis 0,65 empirisch ermittelt wurden, steigt bei den nach dem erfindungsgemäßen Verfahren hergestellten Verbindungen der Zapfenreibungskoeffizient $\mu_z$ auf Werte, die über 1 liegen und bis zu einem mehrfachen hiervon reichen können. Der Anteil der mechanischen Verzahnung zwischen Oberflächenunregelmäßigkeiten, wie er sonst bei Preßverbänden genutzt wird, kann als relativ unbedeutend angesehen werden, weil auch bei genauester Bearbeitung der Gegenflächen nur ein kleiner Teil der theoretischen Oberflächen in unmittelbarer Berührung steht. Mit der Steigerung des Druckes an den Verbindungsflächen bis zur plastischen Verformung des Werkstoffes wachsen bei diesem Verfahren die in Berührung stehenden Flächenanteile auf ein Optimum.

Bei diesem Verfahren ist die für den bleibenden Reibungskoeffizienten entscheidende Pressung während der Druckbeaufschlagung größer als die bleibende Pressung nach Beendigung des Aufweitvorganges. Prinzipiell sind bei einer so hergestellten Verbindung die erzielbaren Momente größer als vergleichsweise bei einer Schrumpfverbindung, bei der die maximale Pressung gleichzeitig die bleibende Pressung ist.

Nach dem erfindungsgemäßen Verfahren wird durch Drucküberhöhung zusätzlich zu der insgesamt plastischen Verformung der Hohlwelle zumindest in der Randschicht der Durchgangsöffnung der Konstruktionselemente ebenfalls eine plastische Verformung durch Aufbringen höherer hydraulischer Drücke bewirkt, die die angesprochenen Ergebnisse herbeiführt. Der gewünschte Erfolg ist davon abhängig, daß metallische Anteile beider Oberflächen unmittelbar in Berührung kommen. Dies ist durch die Verfahren gemäß einem der unabhängigen Ansprüche sichergestellt.

Die optimierte Auslegung der Verbindung wird durch ein hochfestes Material der Konstruktionselemente begünstigt, wobei die Wandstärke und die Fließgrenze des Materials den Bereich der plastisch verformten Durchgangsbohrungsschicht bestimmen. Hierbei ist die Flächenpressung, die beim Aufweiten eingestellt wird, wesentlich größer als die bleibende Pressung, welche z.B. von der Rohrwandstärke oder der Streckgrenze des Rohres begrenzt sein könnte. Damit ist es auch möglich, ausreichend torsionssteife Rohre mit großem Durchmesser, aber geringer Wandstärke und damit begrenzter Steifigkeit gegen Außendruckbelastung zu verwenden. So lassen sich gewichtsoptimierte Nockenwellen und Kurbelwellen mit dünnwandigen Rohren herstellen. Es ist somit auch möglich, z.B. Aluminiumrohre oder Titanrohre mit für einen Preßsitz zu niedrigem E-Modul einzusetzen.

Nach einer ersten prinzipiellen Durchführungsform eines erfindungsgemäßen Verfahrens werden an den zu verbindenden Teilen unmittelbar vor dem Herstellen der Verbindung metallisch saubere Oberflächen hergestellt, z.B. durch mechanische Bearbeitung oder in reduzierender Atmosphäre, wobei in besonders günstiger Weise bis zum Herstellen der Verbindung die reduzierende Atmosphäre oder eine innerte Atmosphäre aufrechterhalten wird. Der Vorteil der hiermit beschriebenen Verfahrensart liegt darin, daß keine Oxideinschlüsse oder Beschichtungseinschlüsse in der verschweißten Verbindungsschicht zurückbleiben. Eine entsprechend höherwertige Verbindung, deren Festigkeit verbessert ist, ist das Ergebnis.

Nach einer zweiten grundsätzlichen Durchführungsform eines erfindungsgemäßen Verfahrens wird in der Durchgangsöffnung des Konstruktionselementes und an der Oberfläche des Hohlrohres eine für die genannte Art der Verbindung besonders geeignete Randschicht aufgebracht, wobei dies vorzugsweise nach einer Vorbehandlung zur Erzeugung einer metallisch reinen Oberfläche erfolgen kann, ggfs. aber auch ein Verzicht auf eine derartige Vorbehandlung möglich ist. Die aufgebrachte Metallschicht ist zur Verbesserung der Adhäsionswirkung nur einige "A" dick. Die Adhäsionswirkung kann durch die Werkstoffauswahl günstig beeinflußt werden. Dies ist der Fall, wenn beide Gegenflächen hinsichtlich des atomaren Bindungscharakters gleichartig sind, die Werkstoffe eine hohe Oberflächenenergie bzw. Grenzflächenenergie haben und insbesondere aus kubisch flächenzentrierten Metallen bestehen. Die Metalle sollen hochschmelzend und möglichst schwer durch chemische Umgebungseinflüsse veränderbar sein. Solche Werkstoffe sind z.B. Kupfer, Silber, Reineisen, austenitischer Stahl, Zinn, Nickel.

Das Auftragen derartiger Randschichten kann auf mechanischem Wege, z.B. durch sogenanntes Aufbürsten erfolgen, wobei etwa rotierende Drahtbürsten durch die Durchgangsöffnung geführt werden, deren Material sich während dieses Verfahrensschrittes abträgt und auf der Oberfläche zurückbleibt. In vorteilhafter Weise kann dabei auch eine eventuell schon vorhandene Oxidschicht an der zu beschichtenden Oberfläche abgetragen oder teilweise zerstört werden. Die Bürstenkörper können auch mit einem Anteil sehr harter Drähte versehen sein, um den Antrieb der Oxidschicht zu verbessern. Es sind auch galvanische Techniken oder ein Auftrag mittels Plasmastrahl zur Erzeugung solcher Oberflächen geringer Stärke möglich.

Ein weiterer wesentlicher Gesichtspunkt derartiger Materialien für eine aufgetragene Randschicht ist eine hohe plastische Verformbarkeit im Vergleich mit dem Grundmaterial des Konstruktionselementes. Das Verfahren beeinflußt damit auch den Aufbau der Konstruktionselemente, die bevorzugt eine nur wenige Angström dicke Beschichtung in der Durchgangsbohrung mit einer oder mehreren der vorstehend genannten günstigen Eigenschaften aufweisen und zwar sowohl bezüglich der Korrosions- und Bindungseigenschaften als auch bezüglich der Festigkeitseigenschaften in Relation zum Grundmaterial.

Nach einer bevorzugten Weiterbildung des Verfahrens wird neben dem Anteil der Adhäsion an der Haftung auch die Abrasion, d.h. die Furchungswirkung, gezielt zur Sicherung der Haftung genutzt. Wenn durch die Preßkraft beim Fügen die effektive Berührungsfläche gesteigert wird, kann zusätzlich zur Steigerung der Adhäsionswirkung auch die Abrasionswirkung zur Absicherung der Haftung eingesetzt werden. Dabei werden, um ein "Mikrospanen" oder "Mikropflügen" zu bewirken, abrasiv wirkende Teilchen, z.B. mineralische, spröde Teilchen in feinster Verteilung an den Verbindungsflächen aufgebracht. Die abrasiv wirkenden Teilchen werden insbesondere zusammen mit der metallischen oder chemischen Beschichtung, die zur Verbesserung der Adhäsionswirkung schon vorgesehen ist, gemeinsam aufgebracht. Diese Teilchen sind so beschaffen und aufgebracht, daß die Adhäsion dabei nicht verschlechtert wird. Als abrasive Teilchen wird sehr feinkörniger Diamant- oder Korundstaub oder ähnlich harte Mineralpartikel verwendet. Wichtig ist, daß keine oxidierenden Wirkungen von den Teilchen ausgehen. Die Haftwirkung wird verstärkt, wenn die Oberflächenbeschichtung, in welche sich die Partikel eindrücken, eine große Festigkeit oder Härte aufweisen. Wenn die adhäsiv wirkende Schicht sehr dünn ist, können sich die Partikel durch diese Schicht hindurch in den festen Untergrund der Verbindungsflächen eindrücken.

## Patentansprüche

1. Verfahren zum Verbinden einer Hohlwelle mit auf diese aufgeschobenen Konstruktionselementen, die eine den Außendurchmesser der Hohlwelle entsprechende Durchgangsöffnung aufweisen, insbesondere zum Herstellen von gebauten Nockenwellen, Kurbelwellen oder Getriebewellen, mittels hydraulisch bewirkten Aufweitens der Hohlwelle unter plastischer Verformung derselben und unter bleibender elastischer Vorspannung in der Randschicht der Durchgangsöffnung der aufgeschobenen Konstruktionselemente, dadurch gekennzeichnet, daß die stoffschlüssige Verbindung hemmende Oxidschichten in der Durchgangsöffnung des Konstruktionselementes und auf der Hohlwelle unter einer reduzierenden Atmosphäre oder in einem reduzierenden Bad vor der hydraulischen Druckbeaufschlagung der Hohlwelle entfernt werden, so daß durch das hydraulisch bewirkte Aufweiten der Hohlwelle eine stoffschlüssige Verbindung zwischen dem Material der Randschicht der Durchgangsöffnung des Konstruktionselementes mit dem Material der plastisch verformten Hohlwelle hergestellt wird.

2. Verfahren zum Verbinden einer Hohlwelle mit auf diese aufgeschobenen Konstruktionselementen, die eine den Außendurchmesser der Hohlwelle entsprechende Durchgangsöffnung aufweisen, insbesondere zum Herstellen von gebauten Nockenwellen, Kurbelwellen oder Getriebewellen, mittels hydraulisch bewirkten Aufweitens der Hohlwelle unter plastischer Verformung derselben und unter bleibender elastischer Vorspannung in der Randschicht der Durchgangsöffnung der aufgeschobenen Konstruktionselemente, dadurch gekennzeichnet, daß die stoffschlüssige Verbindung hemmende Oxidschichten in der Durchgangsöffnung des Konstruktionselementes und/oder auf der Hohlwelle durch mechanische Bearbeitung vor der hydraulischen Druckbeaufschlagung der Hohlwelle entfernt werden, so daß durch das hydraulich bewirkte Aufweiten der Hohlwelle eine stoffschlüssige Verbindung zwischen dem Material der Randschicht der Durchgangsöffnung des Konstruktionselementes mit dem Material der plastisch verformten Hohlwelle hergestellt wird.

3. Verfahren zum Verbinden einer Hohlwelle mit auf diese aufgeschobenen Konstruktionselementen, die eine den Außendurchmesser der Hohlwelle entsprechende Durchgangsöffnung aufweisen, insbesondere zum Herstellen von gebauten Nockenwellen, Kurbelwellen oder Getriebewellen, mittels hydraulisch bewirkten Aufweitens der Hohlwelle unter plastischer Verformung derselben und unter bleibender elastischer Vorspannung in der Randschicht der Durchgangsöffnung der aufgeschobenen Konstruktionselemente, dadurch gekennzeichnet, daß eine die stoffschlüssige Verbindung begünstigende Randschicht in der Durchgangsöffnung des Konstruktionselementes oder auf der Hohlwelle vor der hydraulischen Druckbeaufschlagung der Hohlwelle aufgetragen wird, nämlich aus einem in normaler Atmosphäre nicht korrodierenden Material, oder aus einem Material mit gleichartigem atomaren Bindungscharakter wie das der Hohlwelle und/oder des Elementes, oder aus einem Material mit höherer Oberflächenenergie, oder aus einem Material aus kubisch flächenzentriertem Metall, so daß durch das hydraulich bewirkte Aufweiten der Hohlwelle eine stoffschlüssige Verbindung zwischen dem Material der Randschicht der Durchgangsöffnung des Konstruktionselementes mit dem Material der plastisch verformten Hohlwelle hergestellt wird.

4. Verfahren nach einem der Ansprüche 1 bis 2, dadurch gekennzeichnet, daß die zu verbindenden Teile nach einer Oberflächenbehandlung zum Entfernen von Oxidschichten unter einer reduzierenden oder innerten Atmosphäre bis zur hydraulischen Druckbeaufschlagung der Hohlwelle gehalten werden.

5. Verfahren nach Anspruch 3, dadurch gekennzeichnet, daß das Auftragen des Materials der Randschicht auf mechanische Weise, insbesondere durch Aufbürsten, d.h. mittels Abtrags von den verschleißenden Borsten einer rotierenden Bürste erfolgt.

6. Verfahren nach Anspruch 5, dadurch gekennzeichnet, daß gleichzeitig mit dem Aufbürsten des Materials der Randschicht eine vorhandene Oxidschicht mechanisch aufgerissen oder abgetragen wird, insbesondere mittels längerer und härterer Borsten, z.B. aus Federstahl, einer rotierenden Bürste.

7. Verfahren nach Anspruch 3, dadurch gekennzeichnet, daß das Auftragen des Materials der Randschicht mittels galvanischer Technik erfolgt.

8. Verfahren gemäß einem der Ansprüche 3 bis 7, dadurch gekennzeichnet, daß die Randschicht in einer Dicke von einigen Angström aufgetragen wird.

**Claims**

1. A method of connecting a hollow shaft to elements which are slid thereon and comprise a through-aperture corresponding to the outer diameter of the hollow shaft, especially a method of producing assembled camshafts, crankshafts or driveshafts by hydraulically expanding the hollow shaft to achieve plastic deformation thereof and to achieve permanent elastic pretension in the surface layer of the through-aperture of the slid-on elements, characterised in that the oxide layers in the through-aperture of the element and on the hollow shaft, which inhibit a material-locking connection, are removed under a reducing atmosphere or in a reducing bath prior to hydraulic pressure being applied to the hollow shaft, so that as a result of the hydraulic expansion of the hollow shaft, a material-locking connection is produced between the material of the surface layer of the through-aperture of the element and the material of the plastically deformed hollow shaft.

2. A method of connecting a hollow shaft to elements which are slid thereon and comprise a through-aperture corresponding to the outer diameter of the hollow shaft, especially a method of producing assembled camshafts, crankshafts or driveshafts by hydraulically expanding the hollow shaft to achieve plastic deformation thereof and to achieve permanent elastic pretension in the surface layer of the through-aperture of the slid-on elements, characterised in that the oxide layers in the through-aperture of the element and/or on the hollow shaft, which inhibit a material-locking connection, are removed by machining prior to hydraulic pressure being applied to the hollow shaft, so that as a result of the hydraulic expansion of the hollow shaft, a material-locking connection is produced between the material of the surface layer of the through-aperture of the element and the material of the plastically deformed hollow shaft.

3. A method of connecting a hollow shaft to elements which are slid thereon and comprise a through-aperture corresponding to the outer diameter of the hollow shaft, especially a method of producing assembled camshafts, crankshafts or driveshafts by hydraulically expanding the hollow shaft to achieve plastic deformation thereof and to achieve permanent elastic pretension in the surface layer of the through-aperture of the slid-on elements, characterised in that a surface layer advantageously affecting a material-locking connection is applied to the through-aperture of the element or to the hollow shaft prior to hydraulic pressure being applied to the hollow shaft, such surface layer consisting of a material which does not corrode in a normal atmosphere or of a material whose atomic bonding character is the same as that of the hollow shaft and/or element or of a material with a higher surface energy or of a material constituting a cubically plane-centred metal, so that as a result of the hydraulic expansion of the hollow shaft, a material-locking connection is produced between the material of the surface layer of the through aperture of the element and the material of the plastically deformed hollow shaft.

4. A method according to any one of claims 1 to 2, characterised in that after a surface treatment to remove oxide layers, the parts to be connected are held under a reducing or inert atmosphere until hydraulic pressure is applied to the hollow shaft.

5. A method according to claim 3, characterised in that the surface layer material is applied mechanically, especially by brushing, i.e. by wear of the abrading bristles of a rotating brush.

6. A method according to claim 5, characterised in that while the material of the surface layer is brushed on, an existing oxide layer is mechanically broken up or removed, especially by longer and harder bristles, e.g. made of spring steel, of a rotating brush.

7. A method according to claim 3, characterised in that the material of the surface layer is applied by electroplating.

8. A method according to any one of claims 3 to 7, characterised in that the surface layer is applied in a thickness of several Angström units.

**Revendications**

1. Procédé pour assembler un arbre creux et des éléments de construction enfilés sur celui-ci qui présentent une ouverture de passage correspondant au diamètre externe de l'arbre creux, en particulier pour fabriquer des arbres creux, des arbres à manivelle ou des arbres d'entraînement assemblés, par élargissement hydraulique de l'arbre creux avec déformation plastique de celui-ci et prétension élastique durable de la couche superficielle de l'ouverture de passage des éléments de construction enfilés, caractérisé en ce que les couches d'oxyde de l'ouverture de passage de l'élément de construction et de l'arbre creux qui empêchent la liaison par assemblage de matière sont éliminées dans une atmosphère réductrice ou dans un bain réducteur avant l'application hydraulique d'une pression à l'arbre creux de sorte que l'élargissement hydraulique de l'arbre creux crée une liaison par assemblage de matière entre la matière de la couche superficielle de l'ouverture de passage de l'élément de construction et la matière de l'arbre creux déformé plastiquement.

2. Procédé pour assembler un arbre creux et des éléments de construction enfilés sur celui-ci qui présentent une ouverture de passage correspondant au diamètre externe de l'arbre creux, en particulier pour fabriquer des arbres creux , des arbres à manivelle ou des arbres d'entraînement assemblés, par élargissement hydraulique de l'arbre creux avec déformation plastique de celui-ci et prétension élastique durable de la couche superficielle de l'ouverture de passage des éléments de construction enfilés, caractérisé en ce que les couches d'oxyde de l'ouverture de passage de l'élément de construction et/ou de l'arbre creux qui empêchent la liaison par assemblage de matière sont éliminées par traitement mécanique avant l'application hydraulique d'une pression à l'arbre creux de sorte que l'élargissement hydraulique de l'arbre creux crée une liaison par assemblage de matière entre la matière de la couche superficielle de l'ouverture de passage de l'élément de construction et la matière de l'arbre creux déformé plastiquement.

3. Procédé pour assembler un arbre creux et des éléments de construction enfilés sur celui-ci qui présentent une ouverture de passage correspondant au diamètre externe de l'arbre creux, en particulier pour fabriquer des arbres creux, des arbres à manivelle ou des arbres d'entraînement assemblés, par élargissement hydraulique de l'arbre creux avec déformation plastique de celui-ci et prétension élastique durable de la couche superficielle de l'ouverture de passage des éléments de construction enfilés, caractérisé en ce qu'une couche superficielle favorisant la liaison par assemblage de matière est appliquée dans l'ouverture de passage de l'élément de construction ou sur l'arbre creux, avant l'application hydraulique d'une pression à l'arbre creux, à partir d'une matière non corrosive en atmosphère normale ou à partir d'une matière présentant un caractère de liaison atomique analogue à celui de l'arbre creux et/ou de l'élément, ou à partir d'une matière à énergie superficielle plus importante, ou à partir d'une matière en métal cubique à faces centrées, de sorte que l'élargissement hydraulique de l'arbre creux crée une liaison par assemblage de matière entre la matière de la couche superficielle de l'ouverture de passage de l'élément de construction et la matière de l'arbre creux déformé plastiquement.

4. Procédé selon l'une des revendications 1 et 2, caractérisé en ce que, après un traitement superficiel pour éliminer les couches d'oxyde, les pièces à assembler sont maintenues dans une atmosphère réductrice ou inerte jusqu'à l'application hydraulique d'une pression à l'arbre creux.

5. Procédé selon la revendication 3, caractérisé en ce que l'application de la matière de la couche superficielle est opérée par voie mécanique, en particulier par application par brossage c'est-à-dire par prélèvement sur les poils qui s'usent d'une brosse rotative.

6. Procédé selon la revendication 5, caractérisé en ce que, pendant l'application par brossage de la matière de la couche superficielle, une couche d'oxyde présente est arrachée ou éliminée mécaniquement, en particulier au moyen de poils plus longs et plus durs, par exemple en acier à ressort, d'une brosse rotative.

7. Procédé selon la revendication 3, caractérisé en ce que l'application de la matière de la couche superficielle est opérée par une technique galvanique.

8. Procédé selon l'une des revendications 3 à 7, caractérisé en ce que la couche superficielle est appliquée en une épaisseur de quelques angströms.